Europäisches Patentamt

European Patent Office

Office européen des brevets

(19)

(11) Veröffentlichungsnummer: **0 397 165**
**A1**

## (12) EUROPÄISCHE PATENTANMELDUNG

(21) Anmeldenummer: **90108805.4**

(22) Anmeldetag: **10.05.90**

(51) Int. Cl.5: **C08K 9/08, C08J 3/22**

(30) Priorität: **11.05.89 DE 3915441**

(43) Veröffentlichungstag der Anmeldung:
**14.11.90 Patentblatt 90/46**

(84) Benannte Vertragsstaaten:
**AT BE CH DE DK ES FR GB GR IT LI LU NL SE**

(71) Anmelder: **Plüss-Staufer AG**

**CH-4665 Oftringen(CH)**

(72) Erfinder: **Schlumpf, Hans-Peter, Dr.**
**Bergliweg**
**CH-4665 Oftringen(CH)**
Erfinder: **Pfister, Hans Jörg**
**Grenzstrasse 4**
**CH-4800 Zofingen(CH)**
Erfinder: **Haldemann, Peter**
**Brunnhaldenweg 30**
**CH-4852 Rothrist(CH)**

(74) Vertreter: **Reinhard, Skuhra, Weise**
**Friedrichstrasse 31**
**D-8000 München 40(DE)**

(54) **Redispergierbares Additivagglomerat.**

(57) Die Erfindung betrifft ein redispergierbares Additivagglomerat, welches aus 92,1 - 96,1 Gew.-% mineralischer Additive, 0,1 - 3,0 Gew.-% eines hydrophoben Oberflächenbeschichtungsmittels für die mineralischen Additive und 3,8 - 4,9 Gew.-% eines hydrophoben Bindemittelsystems besteht.

Weiterhin wird ein Verfahren zur Herstellung eines redispergierbaren Additivagglomerates offenbart, wobei in einer an sich bekannten Knetvorrichtung ein hydrophobisiertes Mineraladditiv mit einem hydrophoben Bindemittelsystem unter gleichzeitiger Zugabe eines hydrophilen Dispergiermittels innig verknetet wird.

Die erfindungsgemäßen redispergierbaren Additivagglomerate finden insbesondere in Thermoplasten und als halogenfreies Flammschutzmittel Verwendung.

EP 0 397 165 A1

EP 0 397 165 A1

## Redispergierbares Additivagglomerat

Die Erfindung betrifft ein redispergierbares Additivagglomerat; weiterhin betrifft die Erfindung ein Verfahren zur Herstellung des redispergierbaren Additivagglomerats und die vorzugsweise Verwendung des redispergierbaren Additivagglomerats in Thermoplasten und als halogenfreies Flammschutzmittel.

Mineralische Füllstoffe wie Talk, Calciumcarbonat, Dolomit, Glimmer oder Wollastonit, mineralische Flammschutzmittel wie Aluminiumtrihydrat und Magnesiumhydroxid oder Pigmente wie Ruß oder Titandioxid müssen vor dem Einsatz in Thermoplasten mit Ausnahme von PVC durch einen Compoundier- oder Masterbatchschritt in eine redispergierbare, granulatförmige Form übergeführt werden. Entsprechende Details sind in "Aufbereiten von Polyolefinen" des Vereins Deutscher Ingenieure VDI-Gesellschaft Kunstofftechnik, VDI-Verlag GmbH, Düsseldorf 1984, S. 79 bis 92 enthalten. Diese Compoundier- oder Masterbatch-Verfahren erfordern einen hohen maschinellen und energetischen Aufwand, da das Polymer vollständig aufgeschmolzen und mit dem Additiv innigst verknetet und dann wieder granuliert und abgekühlt werden muß. Aus diesem Grunde besteht die Tendenz, die Füllgrade der Füllstoff-, Verstärkungsmittel-, Flammschutzmittel-, Pigment- oder Additivmasterbatches so hoch wie möglich zu treiben, um dadurch einen möglichst günstigen Gewichts- und Volumenpreis der Fertigprodukte zu erzielen. Dies betrifft speziell den Fall der mengenmäßig wichtigsten Füllstoffmasterbatches mit Calciumcarbonat oder Talk für Polyolefine, da nur mit höchstgefüllten Systemen eine Annäherung an den Volumenpreis der ungefüllten Polyolefine wie PP, LDPE, LLDPE oder HDPE möglich ist.

Füllstoffmasterbatches aus Calciumcarbonat oder Talk bis 75 Gew.-% Füllgrad und 25 Gew.-% Polyolefinträger sind Stand der Technik. Füllgrade über 85 Gew.-% Füllstoffe nach dem Verfahren der europäischen Patentanmeldung EP 0 203 017 mit einem theoretischen Füllstoffgehalt bis 95,0 Gew.-%, einem niedermolekularen Polyolefinträger und einem Monoester der ortho-Phosphorsäure als Dispergator sind als letzter Stand der Technik zu bezeichnen.

In der EP 0 203 017 wird kein oberflächenbeschichteter, hydrophober Füllstoff eingesetzt, weil kein Dispergiermittel mit entgegengesetzter Polarität zum Füllstoff-/Polymersystem verwendet wird, um das Bindemittel zwischen die Kapilaren der Füllstoffteilchen zu pressen, um das Agglomerat zusammenzuhalten. Andererseits wird erfindungsgemäß kein Phosphorsäureester als Dispergator eingesetzt. Das erfindungsgemäß als Dispergiermittel verwendete Wasser wird vollständig abgedampft, so daß im mineralischen Addtivagglomerat kein Dispergiermittel verbleibt. Im Gegensatz dazu verbleibt der in der EP 0 203 017 verwendete Dispergator im Gesamtsystem.

Der tatsächlich ereichbare Füllgrad in der EP 0 203 017 beträgt nur 88 Gew.-% Calciumcarbonat. Zur Herstellung einer homogenen Füllstoff-Polymermatrix-Masse ist nämlich eine Minimalmenge an Bindemittel notwendig, damit das Gesamtsystem in den klassischen Compoundier-oder Masterbatchmaschinen (Innenmischer Typ Banbury, Zweiwellen-Extruder mit Knetelementen Typ Werner + Pfleiderer, Stuttgart/BRD oder Ko-Kneter der Buss AG, Pratteln/Schweiz) verarbeitbar ist. Dies limitiert die technisch mögliche Füllhöhe in der europäischen Anmeldung EP 0 203 017 auf 88 Gew.-% Füllstoff im Gesamtsystem, auch wenn die Patentansprüche bis 95,0 Gew.-% reichen.

Die verwendeten niedermolekularen Polyolefine oder Polyolefincopolymere verbessern die Benetzung des hohen Füllstoffanteils wesentlich und erleichtern zusammen mit dem notwendigen Dispergator die Herstellung von hochgefüllten Füllstoffmasterbatches. Die mit einem Gewichsanteil von mindestens 11 Gew.-% notwendigen niedermolekularen Trägermaterialien weisen jedoch mehrere gravierende Nachteile auf, welche den Einsatz der 88 %-igen Masterbatches in Polyolefinen (Polyethylen-Film, HDPE-und PP-Spritzguß) einschränken. Die fertigen 88 %igen Calciumcarbonat-Masterbatches brennen relativ gut und lassen keinen Einsatz in flammgeschützten Polymerteilen zu. Das niedrige Molekulargewicht des Polyolefinträgers gibt mit der notwendigen Minimalmenge von über 11 Gew.-% eine Reduktion der Steifigkeit (Zug- und Biege-E-Modul) der Fertigteile, welche nicht eintritt, wenn wesentlich geringere Mengen (unter 5 Gew.-%) als Trägerpolymer eingesetzt werden.

Die notwendige minimale Menge von über 11 Gew.-% niedermolekularem Polyolefinträger zur Erreichung des effektiven Füllgrades von 88 Gew.-% Calciumcarbonat im Praxisfall verhindert zudem auch eine Zulassung durch das deutsche Bundesgesund heitsamt in Verpackungen für Lebensmittel (Franck, Kunststoff - 35. Lieferung Oktober 1985, Empfehlung LII 2.1 Füllstoffe für Bedarfsgegenstände aus Kunststoffen). Zugelassen sind dort maximal 2 Gew.-% niedermolekulare Polyolefine, gerechnet auf den Füllstoff. Zusätzlich sind die eingesetzten Dispergatoren (Monoester der ortho-Phosphorsäure) nach den Unterlagen des Bundesgesundheitsamtes in Kunststoffverpackungen nicht zugelassen.

Ähnliche hochgefüllte Füllstoff-Masterbatches sind auch in der DE-PS 24 53 491 beschrieben, wobei in diesem Fall sogar ein Vierkomponentensystem, bestehend aus kristallinen und nichtkristallinen Polyolefinen,

2

einem klassischen Tensid für wäßrige Anwendungen und nicht oberflächenbeschichteten, hydrophilen Füllstoffen oder Pigmenten, benötigt wird, um den angestrebten hohen Füllgrad von bis zu 95,0 Gew.-% zu erzielen. Das notwendige Dispergiermittel (Tensid für wäßrige Anwendung) ergibt wegen seiner Unverträglichkeit in unpolaren Thermoplasten wie Polyolefinen oder Polystyrol einen stark negativen Effekt auf die Steifigkeit der Fertigteile. Die Unverträglichekeit der Tenside führt zudem zu einer Migration an die Fertigteiloberfläche (Filme, Spritzgußteile), wodurch weitere Bearbeitungsschritte wie Schweißen oder Bedrucken stark erschwert werden. Die meisten angemeldeten Tenside sind zudem lebensmittelrechtlich in Kunststoffverpackungen nach den Angaben des deutschen Bundesgesundheitsamtes für Bedarfsgegenstände aus Kunststoffen nicht zugelassen, so daß die Anwendung der patentierten Masterbatches technisch stark eingeschränkt wird.

Aus der DE-OS 34 29 766 sind kornförmige Stabilisatoren für chlorhaltige Polymere bekannt. Diese kornförmigen Stabilisatoren werden hergestellt durch Granulierung eines pulverförmigen Stabilisators oder eines Gemisches eines derartigen Stabilisators mit einem pulverförmigen Stabilisatorhilfsmittel mittels eines organischen fest... Bindemittels oder Dispergiermediums durch Schmelzverbindung der Oberflächenbehandlungsschichten.

Die organischen festen Bindemittel bzw. das Dispergierungsmedium bestehen aus Gleitmittel und Gleitmittelstabilisatoren. Die kornförmigen Stabilisatoren werden, teilweise auch gemischt mit einem Stabilisatorhilfsmittel, mit dem Bindemittel vermischt. Eine Hydrophobisierung von Mineralien, wie sie erfindungsgemäß erforderlich ist, wird hier nicht vorgenommen.

In der DE-PS 26 26 692 wird ein Flammschutz-Masterbatch, bestehend aus bis zu 95,0 Gew.-% rotem Phosphor und einem Spezial-Polymerträger mit sehr hoher Temperaturbeständigkeit, beschrieben (Polymerisate oder Prepolymerisate, welche noch ungesättigte maleinsäure-, fumarsäure- oder alkylartige Bindungen aufweisen). Diese Systeme sind mit den Massenpolymeren wie Polyolefinen oder Polystyrol unverträglich.

Die DE-OS 32 41 395 offenbart Füllstoffmasterbatches bis 90,0 Gew.-% Füllgrad. Zu ihrer Herstellung wird ein Vierkomponentensystem sowie ein spezielles Polyolefinpulver anstelle der handelsüblichen Polyolefingranulate als Bindemittel verwendet. Neben dem nicht oberflächenbeschichteten, hydrophilen Füllstoff benötigt man ein zusätzliches Bindemittel, dessen Schmelzpunkt mindestens $10\,^{\circ}C$ unter dem Schmelzpunkt des kristallinen Polyolefinpulvers liegt. Zusätzlich setzt man noch Additive aus der Gruppe Stabilisatoren, Pigmente und Hilfsstoffe zur Erzielung eines homogenen Systems zu.

Auch hochgefüllte Systeme, welche Lösungsmittel (organische oder Wasser) enthalten, sind bekannt. In der DE-AS 23 64 996 arbeitete man mit dem System Füllstoff/Polymer/Lösungsmittel für das thermoplastische Polymer. Der maximale Füllgrad beträgt 90,0 Gew.-% . Es muß auf jeden Fall eine starke Verdünnung des Trägerpolymeren durch das Lösungsmittel durchgeführt werden, um die technisch notwendige niedrige Viskosität zu erzielen, da die Dispersion zur Produktion der angestrebten trockenen Polymer/ Füllstoff-Flocken durch eine Düse versprüht werden soll. Der Lösungsmittelanteil beträgt dabei 80 bis 95 Gew.-% des Gewichtes der Füllstoffe. Organi sche Lösungsmittel sind in einem Compoundier- oder Masterbatchherstellbetrieb technisch nur sehr schwierig einsetzbar (Brandgefahr, toxikologische Gefährlichkeit, Rückgewinnungskosten), so daß dieser Prozeß marktmäßig kaum eine Chance besitzt.

In einem einzigen in der Literatur beschriebenen Beispiel (Vipin Kumar und Lewis Erwin, ANTEC 87, (Annual Technical Conference of the Society of Plastics Engineers 1987), S. 152-156) wird ein auf einer klassischen Compoundiermaschine (Zweiwellen-Compoundierextruder mit Mischelement Typ ZSK-28 der Werner + Pfleiderer, Stuttgart/BRD) hergestelltes System aus unbeschichtetem, hydrophilem Calciumcarbonat (mittlerer statistischer Teilchendurchmesser 3 bis 5 Mikron), Celluloseacetobutyrat (CAB) als Polymer, Acetyl-triethyl-citrat (ATC) als Weichmacher für das Polymer und Ethylacetat als Lösungsmittel für das Polymer beschrieben. Die Studie ist dazu bestimmt, das Compoundierverhalten von Füllstoff-Aufschlämmungen im System Polymer plus Weichmacher plus Lösungsmittel für das Polymer zu untersuchen, um Aussagen über die kontinuierliche Herstellungsmöglichkeit von hochgefüllten Sprengstoff/Polymersystemen auf Zweiwellen-Compoundiermaschinen zu erhalten. Das eingesetzte Lösungsmittel Ethylacetat soll dabei die gesamte Bindemittelmenge strecken und wird am Ende des Compoundiervorganges wieder verdampft. Die Verfasser stellen dabei aber sehr große technische Probleme fest.

Diese Untersuchung arbeitet zudem mit relativ niedrigen Füllgraden von 85 Gew.-% Calciumcarbonat und erreicht demnach die maximale Füllhöhe der europäischen Patentanmeldung EP 0 203 017 nicht. Sie zeigt edoch, wie Lösungsmittel respektive die entstehende Polymerlösung zur besseren Benetzung des Füllstoffes und zur Erzielung einer knetbaren Masse in einer kontinuierlichen Form eingesetzt werden können.

Zusammenfassend kann demnach die europäische Patentanmeldung 0 203 017 mit einem theoretischen Füllgrad von 95,0 Gew.-% Calciumcarbonat als letzter Stand der Technik für redispergierbare, höchstgefüllte, in Thermoplasten mit klassischen Verarbeitungsverfahren verarbeitbare Füllstoffsysteme betrachtet werden. Unter klassischen Verarbeitungsverfahren sind dabei Spritzguß, Extrusion und Hohlkörperblasen zu verstehen. Diese bekannten Agglomerate zeigen jedoch u.a. den Nachteil, daß ein hoher energetischer Aufwand zu ihrer Herstellung erforderlich ist.

Eine Aufgabe der Erfindung ist es, ein höchstgefülltes redispergierbares Additivagglomerat zu schaffen, welches mit einem möglichst niedrigen maschinellen und energetischen Aufwand in Compoundier- oder Masterbatch-Verfahren eingesetzt werden kann.

Diese Aufgabe wird erfindungsgemäß dadurch gelöst, daß ein redispergierbares Additivagglomerat bereitgestellt wird, welches aus a) 92,1 - 96,1 Gew.-% mineralischer Additive, b) 0,1 - 3,0 Gew.-% eines hydrophoben Oberflächenbeschichtungsmittels für die mineralischen Additive und c) 3,8 - 4,9 Gew.-% eines hydrophoben Bindemittelsystems besteht.

Die geringe notwendige Menge Polymerbindemittel und/oder Polymerbindemittel mit Wachsadditiven von maximal 4,9 Gew.-% läßt auch Varianten zu, welche nach dem deutschen Bundesgesundheitsamt in Bedarfsgegenständen aus Kunststoffen zulässig sind. Zudem wird die Steifigkeit der gefüllten Endprodukte durch die geringe Polymerbindemittel-Menge von maximal 4,9 Gew.-% unwesentlich erniedrigt und die Flammfestigkeit nicht reduziert. Dies hebt dieses Additivagglomerat vorteilhaft von der europäischen Anmeldung EP 0 203 017 mit höchstens 95 Gew.-% mineralischen Füllstoff ab.

Erfindungsgemäß vorteilhaft ist ein redispergierbares Additivagglomerat aus a) 93,3 - 95,8 Gew.-% mineralischer Additive, b) 0,3 - 2,0 Gew.-% eines hydrophoben Oberflächenbeschichtungsmittels für die mineralischen Additive und c) 3.9 - 4,7 Gew.-% eines hydrophoben Bindemittelsystems besteht.

Weiterhin vorteilhaft ist ein redispergierbares Additivagglomerat aus a) 93,3 - 95,5 Gew.-% mineralischer Additive,b) 0,5 - 2,0 Gew.-% eines hydrophoben Oberflächenbeschichtungsmittels für die mineralischen Additive und c) 4,0 - 4,7 Gew.-% eines hydrophoben Bindemittelsystems besteht.

Weiterhin vorteilhaft ist ein redispergierbares Additivagglomerat aus a) 94,0 - 95,0 Gew-% mineralischer Additive, b) 0,8 - 1,5 Gew.-% eines hydrophoben Oberflächenbeschichtungsmittels für die mineralischen Additive und c) 4,2 - 4,5 Gew.-% eines hydrophoben Bindemittelsystems besteht.

Weiterhin vorteilhaft ist ein redispergierbares Additivagglomerat aus a) 94,2 - 94,6 Gew.-% mineralischer Additive, b) 1,0 - 1,2 Gew.-% eines hydrophoben Oberflächenbeschichtungsmittels für die mineralischen Additive und c) 4,4 - 4,6 Gew.-% eines hydrophoben Bindemittelsystems besteht.

Insbesondere vorteilhaft ist ein redispergierbares Additivagglomerat aus a) 95,5 - Gew.-% mineralischer Additive, b) 0,5 Gew.-% eines hydrophoben Oberflächenbeschichtungsmittels für die mineralischen Additive und c) 4,0 Gew.-% eines hydrophoben Bindemittelsystems besteht.

Als mineralische Additive (Füllstoffe) eignen sich alle Produkte, welche durch Oberflächenbeschichtungsmittel hydrophobisiert werden können. Dies betrifft insbesondere mineralische Additive wie Calciumcarbonat, Dolomit, Bariumsulfat, Calciumsulfat, Kaolin, Glimmer, Talk, Wollastonit, Feldspat, Nephelin-Syenit, Silica, Magnesiumcarbonat, Magnesiumhydroxid und Aluminium trihydrat oder deren Kombinationen.

Besonders bevorzugt wird als mineralisches Additiv ein natürliches Calciumcarbonat eingesetzt.

Vorteilhaft besitzt das natürliche Calciumcarbonat einen mittleren statistischen Teilchendurchmesser von 0,5 - 50 $\mu$m .

Besonders vorteilhaft ist ein natürliches Calciumcarbonat mit einem mittleren statistischen Teilchendurchmesser von 1 - 10 $\mu$m.

Ganz besonders vorteilhaft ist ein natürliches Calciumcarbonat mit einem mittleren statistischen Teilchendurchmesser von 2 -6 $\mu$m.

Als Oberflächenbeschichtungsmittel zur Hydrophobisierung der mineralischen Additive eignen sich Fettsäuren und/oder Salze der Fettsäuren und/oder Kombinationen aus Salzen der Fettsäuren mit Fettsäureamiden.

Bevorzugt ist ein Oberflächenbeschichtungsmittel aus gesättigten und/oder ungesättigten Fettsäuren mit 12 - 20 C-Atomen und/oder Salzen dieser Fettsäuren. Insbesondere bevorzugt werden als Salze Erdalkalisalze der Fettsäuren und hierbei insbesondere Magnesiumsalze und Zinksalze der Fettsäuren verwendet.

Als Fettsäureamide werden Amide der gesättigten und/oder ungesättigten Fettsäuren mit 8 - 22 C-Atomen verwendet. Bevorzugt ist dabei ein Oberflächenbeschichtungsmittel aus Metallstearaten und Fettsäureamiden, wobei als Metallstearate insbesondere Magnesiumstearate und Zinkstearate verwendet werden.

Weiterhin werden als Oberflächenbeschichtungsmittel Magnesium-und/oder Zinksalze der Fettsäuren mit Fettsäureamiden im Verhältnis 9 : 1 bis bis 1 : 9 verwendet. Insbesondere bevorzugt ist ein Oberflächenbeschichtungsmittel aus Magnesiumstearat/Stearinsäureamid im Verhältnis 1 : 1. Ganz besonders vorteilhaft ist ein Oberflächenbeschichtungsmittel aus Magnesiumstearat/Zinkstearat/Stearinsäureamid

EP 0 397 165 A1

im Gewichtsverhältnis 1/3 : 1/3 : 1/3.

Weiterhin bevorzugt sind Oberflächenbeschichtungsmittel aus einem Ester der Fettsäuren sowie Monoester der Ortho-Phosphorsäure. Weiterhin vorteilhaft ist ein Oberflächenbeschichtungsmittel aus Silan und/oder einem Titanat und/oder einem Zirkonaluminat.

Diese Beschichtungen sind auch für Flammschutzmittel wie Talk und Magnesiumhydroxid geeignet.

Für Silikatfüllstoffe wie Kaolin, Glimmer, Wollastonit, Feldspat, Nehphelin-Syenit oder Silica eignen sich insbesondere Beschichtungen wie Silane, Titanate oder Zirkonaluminate. Dieselben Beschichtungsmitel sind auch geeignet für das mineralische Flammschutzmittel Aluminiumtrihydrat. Entsprechende Beispiele sind in Gächter/Müller : Kunststoff-Additive, 2. Auflage, Carl Hanser Verlag, München, 1983, S. 424/439 beschrieben.

Als Bindemittelsystem werden bevorzugt unpolare Polymere und/oder Wachse und/oder mikrokristalline Wachse eingesetzt.

Geeignete Bindemittelsysteme finden sich unter den niedermolekularen Polymerisaten und Copolymerisaten der Olefine, insbesondere des Ethylens, des Propylens, des Butylens, des Isobutylens und des Octenylens. Das Molekulargewicht der niedermolekularen Polymere oder Copolymere muß dabei so gewählt werden, daß die eingesetzten Polymere während des Verknetungsvorganges flüssig oder hochviskos sind und zur Brükkenbildung zwischen den Mineralienteilchen befähigt sind.

Vorteilhaft ist ein Bindemittelsystem aus einem Copolymer aus Buten und/oder Isomeren der einfach ungesättigten $C_4$-Olefine, Propylen und Ethylen.

Als besonders geeignet hat sich ein Copolymer I aus Alpha-Olefinen mit vorwiegendem Butengehalt herausgestellt. Der Rest ist Ethylen und Propylen. Das Polymer ist amorph und wird im Niederdruckverfahren hergestellt. Die Schmelzviskosität im Rotationsviskosimeter beträgt 8'000 mPa.s (190 °C) und der Erweichungspunkt Ring und Kugel ca. 85 °C (DIN 52011). Die Penetration 100/25/5 in Anlehnung an DIN 52010 (0,1mm) beträgt ca. 15. Der Brechungsindex nach Fraas nach DIN 52012 liegt bei ca. -30 °C. Der Masseverlust nach 2 h bei 180 °C unter Stickstoff liegt unter 1 %.

Insbesondere geeignet ist ein Bindemittelsystem aus einem Copolymeren aus Buten, Propylen und Ethylen, wobei der Butengehalt 50 - 70 Gew.-%, der Propylengehalt 45 - 20 Gew.-% und der Ethylengehalt 5 - 10 Gew.-% beträgt.

Als ganz besonders vorteilhaft hat sich ein Bindemittelsystem herausgestellt, wobei das Copolymer einen Butengehalt von 65 Gew.-%, einen Propylengehalt von 30 Gew.-% und einen Ethylengehalt von 5 Gew.-% aufweist.

Weiterhin vorteilhaft ist ein Bindemittelsystem mit einem Copolymeren mit überwiegendem Propylengehalt. Insbesondere vorteilhaft ist ein Bindemittelsystem aus einem Copolymeren aus Buten, Propylen und Ethylen, wobei der Butengehalt 45 - 20 Gew.-%, der Propylengehalt 50 - 70 Gew.-% und der Ethylengehalt 5 - 10 Gew.-% beträgt. Ganz besonders vorteihaft ist ein Copolymer mit einem Butengehalt von 30 Gew.-%, einem Propylengehalt von 65 Gew.-% und einem Ethylengehalt von 5 Gew.-%.

Auch die Polyoctenylene mit hohem Transgehalt bilden geeignete Trägerpolymere.

Das niedermolekulare polymere Bindemittel kann durch geeignete, hydrophobe andere Bindemitel wie Paraffine oder Wachse verdünnt werden. Geeignete Produkte sind plastische oder harte Mikrowachse, Amide und Montanwachse (auch in Form der Calcium-oder Zinksalze). Weiter mögliche Wachse stellen die Esterwachse sowie die Polyethylen- oder Polypropylenwachse oder Kombinationen von verschiedenen Wachsen dar. Aus Gründen der Zulassung für Bedarfsgegenstände aus Kunststoffen ist dabei den mikrokristallinen Wachsen (Mikrowachsen) der Vorzug zu geben, da diese lebensmittelrechtlich in Kunststoffverpackungen zugelassen sind. Dies betrifft insbesondere Mikrowachse mit einer Erstarrungstemperatur nach DIN 51 556 nicht unter 50 °C und nicht über 90 °C.

Wachse sind nach einer Definition der deutschen Gesellschaft für Fettwissenschaft aus dem Jahre 1954 eine "technologische Sammelbezeichnung für eine Reihe natürlich oder künstlich gewonnener Stoffe, die in der Regel folgende Eigenschaften haben : Bei 20 ° knetbar, fest bis brüchig hart, grob- bis feinkristallin, durchscheinend bis opak, jedoch nicht glasartig; über 40 ° ohne Zersetzung schmelzend, schon wenig oberhalb des Schmelzpunktes verhältnismäßig niedrigviskos und nicht fadenziehend, stark temperaturabhängige Konsistenz und Löslichkeit, unter leichtem Druck polierbar." Wachs ist also eine phänomenologische bzw. eine warenkundliche Bezeichnung, ähnlich wie "Harz" oder "Metall". Nach Ivanovszky (SÖFW 74 (1950) 14) unterscheiden sich Wachse von ähnlichen synthetischen oder natürlichen Produkten (z.B. Harzen, plast. Massen, Metallseifen usw.) hauptsächlich darin, daß sie in der Regel etwa zwischen 50 ° und 90 ° (in Ausnahmefällen auch bis zu etwa 200 °) in den schmelzflüssigen, niederigviskosen Zustand übergehen, praktisch frei von aschebildenden Verbindungen sind (od. nur unwesentliche Mengen davon enthalten), Pasten oder Gele bilden, daß sie - in der Regel mit rußender Flamme brennend - zu Beleuchtungszwecken verwendet werden können und Dauerglanz vermitteln. Chemisch bestehen die meist als komplizierte Gemische vorliegenden Wachse aus Kohlenwasserstoffen, Estern (Wachsestern, s. z.B. Lee et al., Naturwiss. 59 (1962) 406-411) oder Säuren (Wachssäuren, Fettsäuren). In wenigen Fällen treten auch Alkohole, Äther und auch aromatische Kohlenwasserstoffe auf."(vergl. zur Definition der Wachse : Dr. Otto-Albrecht Neumüller: Römpps Chemie-Lexikon , Frankh'sche Verlagshandlung, Stuttgart 1977).

Mikrowachse sind Wachsprodukte aus dem in Rohöl-Lagertanks und in Ölleitungen sich absetzenden, in Schmieröl-Destillaten und in Destillationsrückständen schwerer Erdöle enthaltenen Mineralwachs, welches entölt und durch Behandlung mit Schwefelsäure, Aluminiumchlorid oder Bleicherde aufgehellt wird. Im Gegensatz zu grobkristallinem Handelsparaffin weist Mikrowachs eine sehr feine Kristallstruktur auf; es wird daher gelegentlich auch als mikrokrist. Paraffin (Mikroparaffin), Ceresin, Hartpetrolatum bezeichnet und ist ein seinen Eigenschaften dem Ozokerit ähnlich. Die Farbe variiert von Schwarzbraun über Gelb bis Weiß, die Konsistenz von klebrig, weichplast. bis hart, der Schmelzpunkt liegt zwischen 60 und 90°." (Definition der Mikrowachse entspr. Römpps Chemie-Lexikon, a.a.O.).

Besonders vorteilhaft werden als Wachse Esterwachse eingesetzt. Weiterhin vorteilhaft können als mikrokristalline Wachse harte und/oder plastische mikrokristalline Wachse eingesetzt werden.

Das Bindemittelsystem besteht insbesondere vorteilhaft aus einem Copolymer und einem mikrokristallinen Wachs im Gew.-Verhältnis 1 : 1.

Weiterhin besonders vorteilhaft ist ein Bindemittelsystem aus 10 - 90 Gew.-% an Copolymeren und aus 90 - 10 Gew.-% an mikrokristallinen Wachsen.

Eine weitere Aufgabe der Erfindung liegt in der Schaffung eines Verfahrens zur Herstellung redispergierbarer Additivag glomerate.

Diese Aufgabe wird erfindungsgemäß dadurch gelöst, daß ein Verfahren zur Herstellung eines redispergierbaren Additivagglomerates bereitgestellt wird, welches aus folgenden Verfahrensschritten besteht :

a.) in einer an sich bekannten, geeigneten Knetvorrichtung wird ein Mineraladditiv zusammen mit einem hydrophoben Oberflächenbeschichtungsmittel für die mineralischen Additive und einem hydrophoben Bindemittelsystem unter gleichzeitiger Zugabe eines hydrophilen Dispergiermittels innig verknetet;

b) nach Erzielung einer homogenen Masse wird das vorübergehend eingesetzte hydrophile Dispergiermittel soweit wieder verdampft, daß ein staubfreies Agglomerat entsteht;

c) die Restfeuchtigkeit des Agglomerates wird durch einen anschließenden Nachtrocknungsvorgang restlos entfernt.

Ausgangspunkt für das erfindungsgemäße Verfahren ist also der zusätzliche Einsatz eines inerten Lösungsmittels, dessen Polarität konträr zur Polarität aller übrigen Mischungsbestandteile (mineralische Additive/Füllstoffe, Polymerträger, übrige Bindemittel) gewählt wird. Das inerte Lösungsmittel wird nur während dem Agglomeriervorgang eingesetzt und anschließend wieder entfernt. Das Verfahren unterscheidet sich demnach komplett von den Verfahren der DE-PS 23 64 996 oder der EP 0 203 017 sowie von der Arbeit von Vipin Kumar/Lewis Erwin, wo immer ein Lösungsmittel mit der gleichen Polarität wie das Polymerträgersystem gewählt wird, so daß der Polymerträger im nicht wäßrigen Fall im Lösungsmittel löslich ist.

Verwendet man dagegen erfindungsgemäß Wasser als vorübergehendes Dispergiermittel, müssen die mineralischen Additive (Füllstoff, Flammschutzmittel) vor oder während dem Agglomerationsvorgang hydrophobisiert (oberflächenbeschichtet) werden. Alle übrigen Zutaten wie Polymerträger oder Wachsadditive sind ebenfalls hydrophob zu wählen.

Weiterhin müssen alle Zusätze außer den Mineraladditiven (Polymerträger, Wachsadditive) während der Verknetung flüssig sein. Dadurch können diese Additive während dem anschließenden Abdampfen der Flüssigkeit durch Kapillar- und Oberflächenspannungsskräfte Brücken zwischen den Mineralienteilchen bilden, wodurch das staubfreie Agglomerat überhaupt erst gebildet wird.

Aus der DE-PS 38 06 420 ist ein Verfahren zur Herstellung von nichtstaubenden, metallhaltigen Stabilisatorgranulatoren für Polyvinylchlorid bekann, wobei die Stabilisatoren in einem Mischapparat zusammen mit einer wäßrigen Emulsion eines Bindemittels, die geringe Anteile eines Emulgators enthält, eingeführt und granuliert werden. Erfindungsgemäß wird jedoch jeder Einsatz von anionischen, kationischen oder nichtionischen Emulgatoren vermieden.

Aus der DE-OS 28 23 156 ist ein Verfahren zur Herstellung eines beschichteten teilchenförmigen Füllstoffs bekannt, wobei die Oberfläche des Füllstoffs mit einem säuregruppenhaltigen organischen Polymer mit mindestens einer ungesättigten Gruppe beschichtet wird. In diesem Verfahren wird ausschließlich ein Oberflächenbeschichtungsmittel für den mineralischen Füllstoff verwendet, jedoch kein hydrophobes Bindemittelsystem. Weiterhin soll im Verfahren gemäß der DE-OS 28 23 156 das organische Polymer zur Oberflächenbeschichtung, bevorzugt gelöst, vorliegen. Um eine leichte Löslichkeit zu erreichen, wird ein organisches Lösungsmittel verwendet, d.h. ein Lösungsmittel mit der gleichen Polarität wie das oberflächenbeschichtete Mineral. Wird dagegen Wasser als Lösungsmittel verwendet, muß die Anzahl der Säuregruppen je Molekül stark erhöht werden, um die Wasserlöslichkeit des Polymers zu erhöhen. Erfindungsgemäß wird dagegen ein Dispergiermittel eingesetzt, welches kontrar zur Polarität der Mineraladditive und des Bindemittelsystems ist. Eine Lösung des Bindemittelsystems bzw. des Hydrophobisierungsmittels im hydrophilen Dispergiermittel darf deshalb nicht nur nicht stattfinden, sondern ist überhaupt nicht möglich.

Agglomerationsprozesse in Flüssigkeiten sind Stand der Technik. Entsprechende neuere Literatur ist bei Takakatsu Takamori, Powder Technology (Paper International Symposium) 1981, (veröffentlicht 1984), S. 634 - 645 zu finden. Neuere Arbeiten über die spherische Agglomeration in Flüssigkeiten umfassen zum Beispiel Y. Kaashima et al., Powder Technology 46 (1986) S. 61 - 66 oder Takamori, Takumatsu, Nippon Kogyo Kaishi 102 (1986) 1185, S. 795 - 800. In allen diesen Fällen wird jedoch beim Einsatz von Wasser eine niedermolekulare Brückenbildungsflüssigkeit, d.h. ein Lösungsmittel, und kein Polymer und/oder Wachssystem für die Haftung zwischen den Mineralienteilchen verwendet.

Beim erfindungsgemäßen Einsatz von Wasser zur Herstellung eines Agglomerates aus 92,1 - 96,1 Gew.-% mineralischer Additive, 0,1 - 3,0 Gew.-% eines hydrophoben Oberflächenbeschichtungsmittels für die mineralischen Additive und 3,8 -4,9 Gew.-% eines hydrophoben Bindemittels oder Bindemittelgemisches werden nur hydrophobe, wasserunlösliche Additive eingesetzt. Jeder Einsatz von anionischen, kationischen oder nichtionogenen Emulgatoren wird vermieden. Das Wasser stößt den hydrophobisierten Füllstoff und das hydrophobe Bindemittelsystem ab. Dadurch können, trotz der geringen Bindemittelmenge von maximal 4,9 Gew.-%, durch Kapillarkräfte und mittels der Oberflächenspannung (Laplace-Gleichung) genügend Brücken und Haftpunkte zwischen den Füllstoffteilchen gebildet werden, so daß ein staubfreies, redispergierbares Füllstoffagglomerat entsteht. Es ist auch am Ende kein zusätzlicher Koagulations vorgang mit Salzen, Säuren oder durch Hitzeeinwirkung mehr notwendig, und eine möglichst hohe Hydrophilie und Wasseraufnahmefähigkeit ist absolut unerwünscht. Feuchte Füllstoffagglomerate können in normalen Spritzgußmaschinen, Extrudern oder Hohlkörperblasanlagen für Thermoplaste, insbesondere für Polyolefine oder Polystyrol, nicht eingesetzt werden, da die Entgasungsmöglichkeiten fehlen.

Das erfindungsgemäße Verfahren unterscheidet sich damit wesentlich vom sogenannten "Flushing"-Verfahren. Dieses ist von T.A. Langstroth in Color Engineering, 1968, Juli - August, S. 40 - 45 beschrieben worden. Dabei werden Pigmente mit Tensidzusätzen in Wasser dispergiert und dann durch einen Knetvorgang in ein unpolares Lösungsmittel oder Polymer (z.B. Polyethylen) übergeführt. Wie im US-Patent 3 755 244 beschrieben, liegt beim Flushing-Verfahren das Verhältnis charakteristischerweise für Pigment zu Polymer zu Wasser bei 100 : 90 : 600 (vergl. Beispiel 1), während nach dem zum Patent angemeldeten Agglomerierverfahren dieses Verhältnis bei ca. 100 : 4 : 20 liegt, d. h. es wird, verglichen mit dem Flushing-Verfahren, nur ein geringer Bruchteil an Polymerbindemitteln eingesetzt.

Vorteilhaft ist ein Verfahren, bei dem die Mineraladditive unbeschichtet sind und das Oberflächenbeschichtungsmittel erst zu Beginn des Knetvorganges dem Gesamtsystem zugesetzt wird. Die Mineraladditive können jedoch auch bereits zu Beginn des Knetvorgangs hydrophobisiert-beschichtet vorliegen.

Weiterhin bevorzugt ist ein Verfahren, bei welchem nach Beendigung des Knetvorganges eine weitere Homogenisierung stattfindet und die Endausformung zu granulatförmigen Agglomeraten auf einem Ein- oder Zweischneckenextruder stattfindet. Es ist weiterhin vorteilhaft, daß nach Beendigung des Knetvorganges die Endtrocknung und die Granulierung kontinuierlich auf einem Scherwalzwerk stattfindet.

Insbesondere vorteilhaft ist ein Verfahren, bei welchem 75,5 - 81,0 Gew.-% Mineraladditiv, 2,4 - 0,9 Gew.-% Oberflächenbeschichtungsmittel, 4,0 - 3,3 Gew.-% Bindemittel und 18,1 -14,8 Gew.-% Dispergiermittel verwendet werden.

Weiterhin vorteilhaft ist ein Verfahren, bei welchem 76,0 -80,5 Gew.-% Mineraladditiv, 2,2 - 0,9 Gew.-% Oberflächenbeschichtungsmittel, 4,0 - 3,3 Gew.-% Bindemittel und 17,8 -15,3 Gew.% Dispergiermittel verwendet werden.

Ebenfalls vorteilhaft ist ein Verfahren, bei welchem 76,0 -80,0 Gew.-% Mineraladditiv, 2,2 - 0,9 Gew.-% Oberflächenbeschichtungsmittel, 4,0 - 3,3 Gew.% Bindemittel und 17,8 -15,8 Gew.-% Dispergiermittel verwendet werden.

Bevorzugt wird ein Verfahren, bei welchem 78,0 bzw. 79,0 Gew.-% Mineraladditiv, 1,7 bzw. 1,0 Gew.-% Oberflächenbeschichtungsmittel, 3,6 bzw. 4,0 Gew.-% Bindemittel und 16,7 bzw. 16,0 Gew.% Dispergiermittel verwendet werden.

Die hergestellten trockenen, staubfreien Füllstoffagglomerate sind in Thermoplastverarbeitungsmaschinen für Extrusion, Spritzguß oder Hohlkörperblasen mit Polymergranulat mischbar und redispergierbar.

Die erfindungsgemäßen redispergierbaren Additivagglomerate können zur Einarbeitung in Thermoplasten, besonders in Polyolefinen und/oder Polystyrolen und/oder deren Copolymeren, verwendet werden. Weiterhin vorteilhaft ist die Verwendung der erfindungsgemäßen redispergierbaren Additivagglomerate als halogenfreies Flammschutzmittel.

Weitere Aufgabenstellungen, Merkmale und Vorteile der Erfindung ergeben sich aus der folgenden Beschreibung anhand von Ausführungsbeispielen. Alle Prozentangaben in der gesamten Beschreibung beziehen sich auf Gewichtsprozente, sofern nicht anders angegeben.

Vorbemerkungen zu den Beispielen

Meßmethoden

a.) Bestimmung der spezifischen Oberfläche nach BET.

Die Messung der spezifischen Oberfläche erfolgte entsprechend DIN 66 131 und DIN 66 132. Dabei wurde die bis zur Gewichtskonstanz bei 105° C vorgetrocknete Probe im Thermostat bei 250° C unter Stickstoff-Spühlung während einer Stunde ausgeheizt. Die Messung erfolgte dann mit Stickstoff als Meßgas unter Kühlung mit flüssigem Stickstoff.

b.) Bestimmung des mittleren statistischen Teilchendurchmessers.

Der mittlere statistische Teilchendurchmesser wurde durch Sedimentationsanalyse im Schwerefeld mit dem SEDIGRAPH 5000 der Firma Micromeritics, U.S.A. bestimmt.

c.) Oberflächenbeschichtung mit Kombinationen aus Metallstearat und Stearinsäureamid

Die Vorbeschichtung der Füllstoffe erfolgt in einem 2 1-Laborintensivmischer der Firma MTI, Lage/BRD. Der Füllstoff wurde im Mischer durch Friktion bei 4'000 Upm auf 20° C über die Schmelztemperatur des entsprechenden Oberflächenbeschichtungsmittels aufgeheizt, dann das flüssige Beschichtungsmittel zugetropft und weitere 10 min bei 4'000 Upm gemischt, um eine homogene Bedeckung der Füllstoffoberfläche zu erzielen.

d.) Beschichtung von Silikaten mit Silanen

Zur Beschichtung der Silikatfüllstoffe wurde ein Gamma-Aminopropyltriethoxysilan eingesetzt. Das Silan hydrolisierte man zuerst für eine Stunde in der fünffachen Mischung aus 90 % Isopropanol / 10 % Wasser. Die hydrolisierte Silanlösung tropfte man langsam bei Raumtemperatur während 5 Minuten auf das sich im MTI-Mischer befindliche, bei 4'000 Upm durchmischte Silikat. Anschließend mischte man weiter für 10 Minuten und trocknete hierauf den silanisierten Füllstoff für 1 Stunde bei 105° C.

e.) Herstellung der Agglomerate

Die Herstellung der höchstgefüllten erfindungsgemäßen Agglomerate aus Füllstoff und Bindemittel unter vorübergehendem Wasserzusatz erfolgte in einer 1 1-Universal Misch- und Knetmaschine der Firma Werner + Pfleiderer AG, Stuttgart/BRD. Die Knetmaschine besitzt zwei Z-förmige, gegeneinander arbeitende Knetschaufeln, welche eine Geschwindigkeit von 63 Upm besitzen und ist durch einen Außenmantel mit Wärmeübertragungsöl heizbar. Damit kann die Arbeitsweise einer modernen Masterbatch-Herstellungsmaschine (z.B. Innenmischer Typ Banbury, Zweiwellen-Compoundierextruder mit Knetscheiben Typ ZSK von Werner + Pfleiderer AG) sehr gut simuliert werden.

f.) Redispergierqualität der Agglomerate

Die Prüfung erfolgt in Polyolefinen (PP und HDPE) als wichtige Vertreter der im Spritzguß oder in der Extrusion eingesetzten Polymeren. Die Redispergierung der erfindungsgemäßen Mineralien-Agglomerate führt man mit einem Extrusiometer der Firma Göttfert Werkstoffprüfmaschinen GmbH, Buchen / BRD durch. Die dazu verwendete Extruderschnecke besitzt ein Längen- zu Durchmesserverhältnis (L/D) von 25 und ein Gangtiefenverhältnis von 1:2. Von der Antriebsseite her gesehen war nach einer Länge von 7mal dem Schneckendurchmesser ein Dispergierteil eingebaut, dessen Länge das 2,6-fache des Schneckendurchmessers beträgt. Der Dispergierteil besteht aus 9 Reihen a 6 schwalbenschwanzförmiger Dispergierelemente.

Die Dispergierprüfung erfolgte mittels einer direkten Abmischung von 20 Gew.-% erfindungsgemäßem Agglomerat und 80 Gew.-% granulatförmigen Polyolefinen. Im Falle des HDPE besitzt dieses bei 23°C eine Dichte von 0,955 bis 0,959 und eine Viskositätszahl (reduzierte spezifische Viskosität) von 150. Der Schmelzindex bei 190°C und 2,16 kg beträgt 8.

Das eingesetzte, granulatförmige Homo-Polypropylen hat einen Schmelzindex bei 230°C und 2,16 kg von 15. Die Dichte beträgt 0,905 (23°C) und die Erweichungstemperatur nach DIN 53 460 (Methode A) beträgt 148°C.

Die Massetemperatur im Extrusiometer betrug für HDPE immer 175°C und für PP 230°C. Das erfindungsgemäße Agglomerat ist umso schwieriger in die HDPE-Schmelze einzuarbeiten, je niedriger die Schneckendrehzahl des Extruders gewählt wird. Das aus der Flachdüse austretende Extrudat verpreßte man zu einem Film mit der Stärke von 0,1 mm und qualifizierte die Dispergierung der Agglomerate nach 4 Qualitätsstufen:

- sehr gut: einwandfreie Dispergierung, keine Agglomerate mit Durchmesser über 0,05 mm pro cm$^2$ Filmfläche sichtbar.
- gut : gute Dispergierung mit maximal 2 kleinen Agglomeraten pro cm$^2$ Filmfläche. Der Durchmesser dieser Agglomerate liegt zwischen 0,05 und 0,1 mm.
- mittel: mehr als 2 Agglomerate pro cm$^2$ Filmfläche. Der Durchmesser dieser Agglomerate liegt über 1,0 mm.
- schlecht: mehr als 5 Agglomerate pro cm$^2$ Filmfläche. Der Durchmesser dieser Agglomerate liegt über 1,0 mm.

Alle angegebenen Verhältnisse sind immer Gew.-Verhältnisse, sofern nicht anders angegeben. %-Angaben beziehen sich auf Gew.-%, sofern nicht anders angegeben.

## Beispiel 1

300 g eines natürlichen, gemahlenen Calciumcarbonates I mit einem mittleren statistischen Teilchendurchmesser von 3 μm, einem oberen Schnitt der Kornverteilungskurve von 15 μm und einer mit Stickstoff gemessenen BET-Oberfläche von 2,2 m$^2$/g, oberflächenbeschichtet mit 1 % Magnesiumstearat / Stearinsäureamid (Stearamid), im Gew.-Verhältnis 1:1 bezogen auf den Füllstoff wie in den Vorbemerkungen zu den Beispielen beschrieben, gab man in die auf 150°C Öltemperatur der Heizung geheizte 1 l-Universal Misch- und Knetmaschine. Dann setzte man 12,5 g eines Copolymeren I,bestehend aus Alpha-Olefinen mit vorwiegendem Butengehalt, zu. Der Rest ist Ethylen und Propylen. Das amorphe Polymer hat im Rotationsviskosimeter eine Schmelzviskosität von 8'000 mPa.s (190°C) und einen Erweichungspunkt Ring und Kugel von ca. 85°C (DIN 52 011). Die Penetration 100/25/5 in Anlehnung an DIN 52 010 (0,1mm) beträgt ca. 15. Der Brechpunkt nach Fraas (DIN 52 012) liegt bei -30°C. Nachdem auch noch 78 g Wasser zugesetzt worden waren, knetete man die Gesamtmasse für 20 Minuten unter Ersatz der zwischenzeitlich verdampften 30 bis 40 g Wasser. Nach dieser ersten Knetzeit wird das Wasser nicht mehr ersetzt, sondern unter sonst konstanten Bedingungen für weitere 20 Minuten weitergeknetet, bis das erfindungsgemäße Agglomerat entstanden ist.

Die Endtrocknung erfolgte dann über Nacht bei 105°C im Labor ofen.

Die in den Vorbemerkungen zu den Beispielen angegebene Redispergierqualität in Polyolefinen wurde entsprechend ermittelt. Die erhaltenen Resultate sind in Tabelle 1 dargestellt.

## Beispiel 2

Es wird wie in Beispiel 1 verfahren. Als Beschichtungsmittel für das eingesetzte Calciumcarbonat I wird jedoch 1 % Magnesiumstearat / Zinkstearat / Stearamid im Gew.-Verhältnis 1/3 : 1/3 : 1/3 bezogen auf den Füllstoff eingesetzt. Die Daten der Redispergierung sind in Tabelle 1 zusammengefaßt.

## Beispiel 3

Es wird wie in Beispiel 1 verfahren. Das Beschichtungsmittel für das eingesetzte Calciumcarbonat I ist jedoch der C -Monoester der ortho-Phosphorsäure mit 1 % bezogen auf den Füllstoff. Die Redispergierdaten finden sich in Tabelle 1.

## Beispiel 4

Aus Kostengründen ist es nicht nötig, den Füllstoff vorzubeschichten. Das Beschichtungsmittel kann auch dem System unbeschichteter Füllstoff / Polymerträger / Wasser separat zugesetzt werden.

297 g des Cacliumcarbonates I, 3,0 g Magnesiumstearat / Stearamid im Gew.-Verhältnis 1:1, 12,5 g Copolymer I und 78 g Wasser verknetete man wie in Beispiel 1 angegeben bis zur Erreichung des erfindungsgemäßen Agglomerates und trocknete dies wie angegeben nach. Wie in Tabelle 1 dargestellt, wird auch mit diesem Verfahren eine ausgezeichnete Redispergierbarkeit erzielt.

## Beispiel 5

Es wird wie in Beispiel 4 vorgegangen, jedoch das Beschichtungsmittel $C_{14}$-Monoester der ortho-Phosphorsäure separat zugesetzt. Die Redispergierdaten finden sich in Tabelle 1.

## Beispiel 6

Anstelle des reinen Copolymeren I als Trägermaterial für das Füllstoffagglomerat kann auch eine Abmischung des Copolymeren I mit Wachs benützt werden. Speziell eignen sich dafür mikrokristalline Wachse (Mikrowachse), welche nach den Unterlagen des deutschen Bundesgesundheitsamtes in Kunststoffverpackungen zugelassen sind.

300 g des wie in Beispiel 1 mit 1 % Magnesiumstearat / Stearamid im Gew.-Verhältnis von 1:1 oberflächenbeschichteten Calciumcarbonates I verknetete man mit 6,25 g Copolymer I, 6,25 g plastischem Mikrowachs I und 78 g Wasser zu dem im Beispiel 1 angegebenen Agglomerat. Das plastische Mikrowachs I hat einen Erstarrungspunkt nach DGF M III 4a von 72° bis 74° C. Der Tropfpunkt nach DGF M III 3 beträgt 77° bis 80° C und die Penetrationszahl (DIN 51 579) bei 25° C, 100 g und 5 Sekunden 16 bis 23.

Wie in Tabelle 1 dargestellt, erhält man auch mit der Kombination Copolymer I und plastischem Mikrowachs I ein ausgezeichnet redispergierbares Füllstoffagglomerat.

## Beispiel 7

Bei dem wie Beispiel 6 durchgeführten Beispiel 7 werden zusätzlich zu den 6,25 g Copolymer I als Träger 6,25 g eines harten Mikrowachses II eingesetzt. Mikrowachs II besitzt einen Erstarrungspunkt von 84° bis 87° C, einen Tropfpunkt von 94° bis 97° C und eine Pentration (25° C / 100 g / 5 Sekunden) von 4 bis 6. Auch hier erhält man nach Tabelle 1 ein redispergier bares Agglomerat.

## Beispiel 8

Bei dem nach Beispiel 1 durchgeführten Beispiel 8 ersetzte man die Totalmenge von 12,5 g Copolymer I durch plastisches Mikrowachs I. Damit erzielt man nach Tabelle 1 ein gut redispergierbares Calciumcarbonat-Agglomerat.

## Beispiel 9

Diese wird wie Beispiel 8 durchgeführt, jedoch die Gesamtmenge von 12,5 g Copolymer I durch hartes Mikrowachs II ersetzt und ein gut redispegierbares Agglomerat erhalten (Tabelle 1).

## Beispiel 10

Bei dem wie Beispiel 8 durchgeführten Beispiel 10 ersetzt man die Totalmenge von 12,5 g Copolymer I durch Esterwachs I. Esterwachs I besitzt einen Tropfpunkt nach DIN 51 801 von 79° bis 85° C. Die Säurezahl nach DIN 53 402 beträgt 15 bis 20. Die Verseifungszahl ist 130 bis 160 (DIN 53 401) und die Dichte beträgt bei 20° C 1,01 bis 1,03 g/cm$^3$ (DIN 53 497). Auch mit diesem nicht stark polaren Wachs als Träger kann nach Tabelle 1 ein in Polyolefinen gut redispergierbares Agglomerat hergestellt werden.

Stärker polare Wachse wie Säurewachse führen jedoch nicht mehr zu einer genügend guten Redispergierbarkeit in Polyolefinen.

## Beispiel 11

Es ist nicht notwendig, nur sehr niedermolekulare Polymersysteme wie das in Beispiel 1 beschriebene Copolymer I und/oder Wachse als Trägersysteme zur Bildung der erfindungsgemäßen Agglomerate einzusetzen. Es kann auch gemäß Beispiel 1 anstelle des Copolymers I ein Copolymer II, bestehend aus Alpha- Olefinen (Ethylen, Propylen, Buten) mit einem vorwiegenden Propylengehalt eingesetzt werden, dessen Schmelzviskosität, gemessen bei 190° C im Rotationsviskosimeter, bei 50'000 mPa.s liegt. Das Copolymer II besitzt einen Erweichungspunkt Ring und Kugel (DIN 52 011) von 110° C, eine Penetration 100/25/5 in Anlehnung an DIN 52 010 (0,1 mm) von 14 sowie einen Brechpunkt nach Fraas von -30° C (DIN 52 012).

Auch mit diesem höhermolekularen Copolymer II wird nach Tabelle 1 eine vorzügliche Redispergierung in Polyolefinen erzielt.

## Beispiel 12

Anstelle der in den Beispielen 1 bis 11 beschriebenen Polymer-oder Wachsträgersysteme kann auch ein für die Kautschukverarbeitung entwickeltes Polyoctenylen I mit hohem Transgehalt eingesetzt werden. Die Dichte des Polyoctenylen I beträgt 0,91 g/cm$^3$. Die Defohärten bei 40° C oder 50° C betragen über 20'000 respektive 8'000. Die Mooneyviskositäten (ML 4) werden bei 60° C und 100° C mit 12 respektive 5 angegeben und die Kristallinität des unvulkanisierten Polymers liegt bei 33 %. Der Schmelzpunkt des unvulkanisierten Polymers beträgt 55° C.

Wie in Beispiel 1 gab man 300 g Calciumcarbonat I mit 12,5 g Polyoctenylen I in die auf 150° C geheizte Universal Misch- und Knetmaschine. Nachdem man noch 78 g Wasser zugesetzt hatte, knetete man die Gesamtmasse für 20 Minuten unter Ersatz der zwischenzeitlich verdampften 30 bis 40 g Wasser. Nach dieser ersten Knetzeit wurde das Wasser nicht mehr erneuert, sondern unter sonst konstanten Bedingungen für weitere 20 Minuten weitergeknetet, bis das erfindungsgemäße Agglomerat entstanden ist. Die Trocknung erfolgte wie in Beispiel 1 angegeben.

Die Redispergierung in Polyolefinen ist nach Tabelle 1 gut.

## Beispiel 13

Es wird wie in Beispiel 1 verfahren, jedoch ein gröberes natürliches, gemahlenes Calciumcarbonat II mit einem mittleren statistischen Teilchendurchmesser von 6 μm, einem oberen Schnitt der Kornverteilungskurve von 30 μm und einer mit Stickstoff gemessenen BET-Oberfläche von 1,1 m$^2$/g oberflächenbeschichtet mit 1 % Magnesiumstearat / Stearamid im Gew.-Verhältnis 1:1 und dem Copolymer I als Träger eingesetzt. Die Redispergierbarkeit in Polyolefinen ist nach Tabelle 1 auch bei gröberen Calciumcarbonaten gewährleistet.

## Beispiel 14

Es wird wie in Beispiel 1 verfahren, jedoch anstelle des Calciumcarbonates I ein gefälltes Magnesiumhydroxid I (Mg(OH)$_2$ I) mit einem mittleren statistischen Teilchendurchmesser von 2,2 μm, einem oberen Schnitt der Kornverteilungskurve von 12 μm und einer mit Stickstoff gemessenen BET-Oberfläche von 7 m$^2$/g eingesetzt. Bedingt durch die gegenüber dem Calciumcarbonat I mehr als verdoppelten spezifischen Oberfläche beschichtet man das Mg(OH)$_2$ I mit 2 % Magnesiumstearat / Stearamid 1:1.

Bei Verwendung von Copolymer I als Trägermittel entstehen nach Tabelle 1 sehr gut redispergierbare Agglomerate.

## Beispiel 15

Es wird wie in Beispiel 7 verfahren, jedoch anstelle des Calciumcarbonates I ein Talk I als Füllstoff verwendet. Talk I hat folgende chemische Zusammensetzung: MgO 33 %, $SiO_2$ 46 %, $Al_2O_3$ 10 %, Rest Eisenoxide usw. Der mittlere statistische Teilchendurchmesser beträgt 10 $\mu$m und die mit Stickstoff gemessene BET-Oberfläche beträgt 3 $m^2$/g.

Bei Einsatz des Copolymeren I und Mikrowachs II im Verhältnis von 50:50 anstelle von nur Copolymer I als Bindemittel erhält man in HDPE sehr gut redispergierbare erfindungsgemäße Ag glomerate. In Polypropylen ist die Redispergierung gegenüber Calciumcarbonat I oder II weniger gut (Tabelle 1).

## Beispiel 16

Es wird wie in Beispiel 7 verfahren, jedoch anstelle des Calciumcarbonates I ein Glimmer I, oberflächenbeschichtet mit 1 % Mg Stearat · Stearamid 1:1, eingesetzt. Glimmer I hat eine Dichte von 2,8 $g/cm^3$. Der mittlere statistische Teilchendurchmesser beträgt 4 $\mu$m und der obere Schnitt der Füllstoffverteilungskurve liegt bei 25 $\mu$m. Die Ölzahl beträgt 35 ml/100 g.

Mit Copolymer I plus Mikrowachs II im Gew.-Verhältnis 50:50 als Trägersubstanz erhält man nach Tabelle 1 noch akzeptable Füllstoffredispergierungen in Polyolefinen.

## Beispiel 17

Es wird wie in Beispiel 16 verfahren. Der Glimmer wird jedoch, wie in den Vorbemerkungen zu den Beispielen beschrieben, mit 1 % Gamma-Aminopropyltriethoxysilan beschickt. Als Trägersystem wird wie in Beispiel 16 Copolymer I plus Mikrowachs II im Gew.-Verhältnis 50:50 verwendet. Die Redispergierbarkeit in HDPE ist bei hoher Schneckendrehzahl genügend gut, um das Agglomerat technisch einsetzen zu können.

Tabelle 1

| Beispiel | Mineraladditiv Typ / Bindersystem | HDPE | | | PP | | |
|---|---|---|---|---|---|---|---|
| | | Redispergierprüfung der Mineralienagglomerate in Polyolefinen | | | | | |
| | | 80 % HDPE-Granulat / 20 % Mineralienagglomerat Schneckendrehzahl (Upm) | | | 80 % PP-Granulat / 20 % Mineralienagglomerat Schneckendrehzahl (Upm) | | |
| | | 40 | 30 | 20 | 40 | 30 | 20 |
| 1 | Calciumcarbonat I / Copolymer I | sehr gut | sehr gut | gut | sehr gut | sehr gut | mittel |
| 2 | Calciumcarbonat I / Copolymer I | sehr gut | sehr gut | gut | - | - | - |
| 3 | Calciumcarbonat I / Copolymer I | sehr gut | sehr gut | mittel | sehr gut | gut | mittel |
| 4 | Calciumcarbonat I / Copolymer I | sehr gut | gut | mittel | gut | mittel | mittel |
| 5 | Calciumcarbonat I / Copolymer I | gut | gut | mittel | gut | mittel | mittel |
| 6 | Calciumcarbonat I / Copolymer I / Mikrowachs I | sehr gut | sehr gut | sehr gut | sehr gut | sehr gut | gut |
| 7 | Calciumcarbonat I / Copolymer I / Mikrowachs II | sehr gut | sehr gut | mittel | sehr gut | sehr gut | gut |
| 8 | Calciumcarbonat I / Mikrowachs I | sehr gut | sehr gut | sehr gut | - | - | - |
| 9 | Calciumcarbonat I / Mikrowachs II | sehr gut | sehr gut | sehr gut | - | - | - |
| 10 | Calciumcarbonat I / Esterwachs I | sehr gut | sehr gut | gut | - | - | - |
| 11 | Calciumcarbonat I / Copolymer II | sehr gut | sehr gut | sehr gut | - | - | - |
| 12 | Calciumcarbonat I / Polyoctenylen I | sehr gut | sehr gut | gut | sehr gut | sehr gut | mittel |
| 13 | Calciumcarbonat I / Copolymer I | sehr gut | sehr gut | sehr gut | sehr gut | sehr gut | gut |
| 14 | Magnesiumhydroxid I / Copolymer I | sehr gut | sehr gut | sehr gut | - | - | - |
| 15 | Talk I / Copolymer I plus Mikrowachs II | sehr gut | mittel | mittel | mittel | mittel | schlecht |

| | | | | | | | |
|---|---|---|---|---|---|---|---|
| 16 | Glimmer I / Copolymer I plus Mikrowachs II | sehr gut | mittel | schlecht | - | - | - |
| 17 | Glimmer I silanisiert / Copolymer I plus Mikrowachs II | gut | mittel | schlecht | - | - | - |

## Ansprüche

1. Redispergierbares Additivagglomerat, dadurch gekennzeichnet, daß es aus
   a) 92,1 - 96,1 Gew.-% mineralischer Additive,
   b) 0,1 - 3,0 Gew.-% eines hydrophoben Oberflächenbeschichtungsmittels für die mineralischen Additive und
   c) 3,8 - 4,9 Gew.-% eines hydrophoben Bindemittelsystems besteht.

2. Redispergierbares Additivagglomerat nach Anspruch 1,
   dadurch gekennzeichnet,
   daß es aus
   a) 93,3 - 95,8 Gew.-% bzw. 93,3 - 95,5 Gew.-% bzw. 94,0 - 95,0 Gew.-% bzw. 94,2 - 94,6 Gew.-% bzw. 95,5 Gew.-% mineralischer Additive,
   b) 0,3 - 2,0 Gew.-% bzw. 0,5 - 2,0 Gew.-% bzw. 0,8 -1,5 Gew.-% bzw. 1,0 - 1,2 Gew.% bzw. 0,5 Gew.-% eines hydrophoben Oberflächenbeschichtungsmittels für die mineralischen Additive und
   c) 3,9 - 4,7 Gew.-% bzw. 4,0 - 4,7 Gew.-% bzw. 4,2 -4,5 Gew.-% bzw. 4,4 - 4,6 Gew.-% bzw. 4,0 Gew.-% eines hydrophoben Bindemittelsystems besteht.

3. Redispergierbares Additivagglomerat nach Anspruch 1 oder 2,
   dadurch gekennzeichnet,
   daß als Bindemittelsystem unpolare Polymere und/oder Wachse und/oder mikrokristalline Wachse eingesetzt werden, wobei das Bindemittelsystem bevorzugt ein Copolymer aus Buten und/oder Isomeren der einfach ungesättigten $C_4$-Olefine, Propylen und Ethylen, bevorzugt ein Copolymer aus Buten, Propylen und Ethylen ist, wobei der Butengehalt 50 - 70 Gew.-% bzw. 65 Gew.-% bzw. 45 - 20 Gew.-% bzw. 30 Gew.-%, der Propylengehalt 45 - 20 Gew.-% bzw. 30 Gew.-% bzw. 50 - 70 Gew.-% bzw. 65 Gew.-% und der Ethylengehalt 5 - 10 Gew.-% bzw. 5 Gew.-% bzw. 5 - 10 Gew.-% bzw. 5 Gew.-% beträgt oder daß das Bindemittelsystem Polyoctenylen ist.

4. Redispergierbares Additivagglomerat nach einem oder mehreren der vorangehenden Ansprüche,
   dadurch gekennzeichnet,
   daß als Wachse Esterwachse, als mikrokristalline Wachse harte mikrokristalline Wachse oder plastische mikrokritalline Wachse eingesetzt werden, wobei das Bindemittelsystem aus 10 - 90 Gew.-% an Copolymeren und aus 90 -10 Gew.-% an mikrokristallinen Wachsen, bevorzugt im Verhältnis 1:1, besteht.

5. Redispergierbares Additivagglomerat nach einem oder mehreren der vorangehenden Ansprüche,
   dadurch gekennzeichnet,
   daß als mineralisches Additiv Calciumcarbonat, Dolomit, Bariumsulfat, Calciumsulfat, Kaolin, Glimmer, Talk, Wollastonit, Feldspat, Nephelin-Syenit, Silica, Magnesiumcarbonat, Magnesiumhydroxid oder Aluminiumtrihydrat, bevorzugt natürliches Calciumcarbonat, oder deren Kombinationen eingesetzt werden, wobei das natürliche Calciumcarbonat, je bevorzugter werdend, einen mittleren statistischen Teilchendurchmesser von 0,5 - 50 µm bzw. 1 - 10 µm bzw. 2 - 6 µm besitzt.

6. Redispergierbares Additivagglomerat nach einem oder mehreren der vorangehenden Ansprüche,
   dadurch gekennzeichnet,
   daß das Oberflächenbeschichtungsmittel aus Fettsäuren, bevorzugt aus gesättigten und/oder ungesättigten Fettsäuren mit 12 - 20 C-Atomen und/oder Salzen dieser Fettsäuren besteht, oder
   daß das Oberflächenbeschichtungsmittel aus Salzen der Fettsäuren und Fettsäureamiden besteht, wobei als Salze Erdalkalisalze, Magnesiumsalze und/oder Zinksalze verwendet werden und als Fettsäureamide die gesättigten und/oder ungesättigten Fettsäuren mit 8 - 22 C-Atomen verwendet werden, oder
   daß das Oberflächenbeschichtungsmittel aus Metallstearaten und Fettsäureamiden besteht, wobei als Metallstearate Magnesiumstearate und/oder Zinkstearate verwendet werden, oder
   daß das Oberflächenbeschichtungsmittel aus einem Ester der Fettsäuren besteht, insbesondere einem Monoester der Ortho-Phosphorsäure, oder
   daß das Oberflächenbeschichtungsmittel ein Silan und/oder ein Titanat und/oder Zirkonaluminat ist, oder
   daß das Oberflächenbeschichtungsmittel aus Magnesium-und/oder Zinksalzen der Fettsäuren mit Fettsäureamiden im Gew.-Verhältnis 9:1 bis 1:9 besteht oder
   daß das Oberflächenbeschichtungsmittel ein Magnesiumstearat/Stearinsäureamid im Gew.-Verhältnis 1:1 ist oder
   daß das Oberflächenbeschichtungsmittel ein Magnesiumstearat/Zinkstearat/Stearinsäureamid im Gew.-Verhältnis 1/3:1/3:1/3 ist.

7. Verfahren zur Herstellung eines redispergierbaren Additivagglomerates, insbesondere nach einem oder mehreren der Ansprüche 1 - 6,
gekennzeichnet durch die folgenden Verfahrensschritte:

a.) in einer an sich bekannten, geeigneten Knetvorrichtung wird ein Mineraladditiv zusammen mit einem hydrophoben Oberflächenbeschichtungsmittel für die mineralischen Additive und einem hydrophoben Bindemittelsystem unter gleichzeitiger Zugabe eines hydrophilen Dispergiermittels innig verknetet;

b) nach Erzielung einer homogenen Masse wird das vorübergehend eingesetzte hydrophile Dispergiermittel soweit wieder verdampft, daß ein staubfreies Agglomerat entsteht;

c) die Restfeuchtigkeit des Agglomerates wird durch einen anschließenden Nachtrocknungsvorgang restlos entfernt.

8. Verfahren zur Herstellung des redispergierbaren Additivagglomerats nach Anspruch 7,
dadurch gekennzeichnet,
daß ein Dispergiermittel mit einer Polarität gewählt wird, welches konträr zur Polarität der Mineraladditive und des Bindemittelsystems ist, wobei als Dispergiermittel bevorzugt Wasser verwendet wird und das Bindemittelsystem während der Verknetung flüssig ist,
daß die Mineraladditive bereits zu Beginn des Knetvorgangs hydrophob beschichtet vorliegen oder bevorzugt daß die Mineraladditive unbeschichtet sind und das Oberflächenbeschichtungsmittel erst zu Beginn des Knetvorganges dem Gesamtsystem zugesetzt wird und weiterhin bevorzugt,
daß nach Beendigung des Knetvorganges eine weitere Homogenisierung stattfindet und die Endausformung zu granulatförmigen Agglomeraten auf einem Ein- oder Zweischnekkenextruder stattfindet und
daß bevorzugt nach Beendigung des Knetvorganges die Endtrocknung und die Granulierung kontinuierlich auf einem Scherwalzwerk stattfindet.

9. Verfahren zur Herstellung des redispergierbaren Additivagglomerats nach einem oder mehreren der vorangehenden Ansprüche,
dadurch gekennzeichnet,
daß 75,5 - 81,0 Gew.-% bzw. 76,0 - 80,5 Gew.-% bzw. 76,0 - 80,0 Gew.-% bzw. 78,0 Gew.-% bzw. 79 Gew.-% Mineraladditiv,
2,4 - 0,9 Gew.-% bzw. 2,2 - 0,9 Gew.-% bzw. 2,2 - 0,9 Gew.-% bzw. 1,7 Gew.-% bzw. 1,0 Gew.-% Oberflächenbeschichtungsmittel,
4,0 - 3,3 Gew.-% bzw. 4,0 - 3,3 Gew.-% bzw. 4,0 - 3,3 Gew.-% bzw. 3,6 Gew.-% bzw. 4,0 Gew.-% Bindemittel und 18,1 - 14,8 Gew.-% bzw. 17,8 - 15,3 Gew.-% bzw. 17,8 -15,8 Gew.-% bzw. 16,7 Gew.-% bzw. 16,0 Gew.-% Dispergiermittel verwendet werden.

10. Verwendung des redispergierbaren Additivagglomerats nach einem oder mehreren der vorangehenden Ansprüche in Thermoplasten, bevorzugt in Polyolefinen und/oder Polystyrolen und/oder deren Copolymeren und als halogenfreies Flammschutzmittel.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-258154 (PLUESS STAUFER AG)<br>* Anspruch 1 *<br>--- | 1, 7 | C08K9/08<br>C08J3/22 |
| A, D | EP-A-203017 (PLUESS STAUFER AG)<br>* Anspruch 1 *<br>--- | 1, 7 | |
| X | GB-A-713905 (DIAMOND ALKALI COMPANY)<br>* Ansprüche 9, 13 *<br>* Beispiel 111, Zusammensetzung 2 *<br>--- | 1 | |
| X | DE-B-1289319 (NATIONAL LEAD COMPANY)<br>* Spalte 5, Zeile 8 - Spalte 6, Zeile 12 *<br>----- | 7 | |

**RECHERCHIERTE SACHGEBIETE (Int. Cl.5)**

C08K
C08J

Der vorliegende Recherchenbericht wurde für alle Patentansprüche erstellt

| Recherchenort | Abschlußdatum der Recherche | Prüfer |
|---|---|---|
| DEN HAAG | 02 AUGUST 1990 | SCHUELER D.H.H |

EPO FORM 1503 03.82 (P0403)